# EUROPEAN PATENT APPLICATION

(11) **EP 4 827 138 A1**
(43) Date of publication of application: **21.10.2026**
(21) Application number: 23961792.1
(22) Date of filing: 19.12.2023
(51) Int. Cl.: H04W 8/24

(54) **OTA UPGRADE METHOD, AND APPARATUS AND SYSTEM FOR OTA UPGRADE**

(71) Applicant: Yinwang Intelligent Technologies Co., Ltd., Shenzhen, Guangdong 518110 (CN)
(72) Inventor: XU, Youming, Shenzhen, Guangdong 518110 (CN)
(74) Representative: Henselmann, Alexander Gerhard
(86) International application number: PCT/CN2023/139848
(87) International publication number: WO 2025/129447

(57) **Abstract**

An OTA upgrade method, and an OTA upgrade apparatus and system are provided. The method includes: generating OTA upgrade orchestration information based on M to-be-upgraded ECUs of an intelligent device, where the OTA upgrade orchestration information indicates at least one upgrade phase, an intelligent device status required for a first upgrade phase of the at least one upgrade phase, and a flashing sequence of at least one ECU in the first upgrade phase, a total quantity of ECUs included in each of the at least one upgrade phase is M, and M is an integer greater than or equal to 1; and sending the OTA upgrade orchestration information to the intelligent device, where the OTA upgrade orchestration information is used by the intelligent device to perform ECU flashing. The technical solutions of this application may be applied to the field of vehicle-to-everything technologies, for example, the field of OTA upgrade of a new energy vehicle or an intelligent vehicle, to help improve flexibility of OTA upgrade control and reduce costs of OTA upgrade control.

## Description

### TECHNICAL FIELD

This application relates to the field of vehicle-to-everything technologies, and more specifically, to an OTA upgrade method, and an OTA upgrade apparatus and system.

### BACKGROUND

An over-the-air (over-the-air, OTA) technology is a technology for downloading data through a wireless network, and has been widely used for upgrading devices such as a vehicle, a television, a mobile phone, a tablet computer, and a set-top box. In the OTA technology, automatic upgrade is mainly performed by downloading an OTA upgrade package or copying an OTA upgrade package. OTA upgrade is fast and has little impact on data. Therefore, OTA upgrade becomes a main manner for upgrading a function of a terminal.

When an entire vehicle is upgraded, a plurality of electronic control units (electronic control units, ECUs) in the vehicle are involved. In an upgrade process, the plurality of ECUs may have sequential dependence or may be upgraded in parallel, and each of the plurality of ECUs may require a different vehicle status. As a result, vehicles of different vehicle models have different upgrade control logic. In addition, in a current OTA upgrade technology, an ECU flashing sequence is generally "hardcoded" in code of upgrade software. As a result, upgrade software needs to be customized for different vehicle models, which increases costs of OTA upgrade.

### SUMMARY

This application provides an OTA upgrade method, and an OTA upgrade apparatus and system, and provides a way of orchestrating an ECU flashing sequence and condition, to help improve flexibility of OTA upgrade control and reduce costs of OTA upgrade control.

According to a first aspect, an OTA upgrade method is provided. The method may be performed by an OTA server, or may be performed by a chip or a circuit in an OTA server. The method may include: generating first OTA upgrade orchestration information based on M to-be-upgraded ECUs of an intelligent device, where the first OTA upgrade orchestration information indicates at least one upgrade phase, an intelligent device status required for a first upgrade phase of the at least one upgrade phase, and a flashing sequence of at least one ECU in the first upgrade phase, a total quantity of ECUs included in each of the at least one upgrade phase is M, and M is an integer greater than or equal to 1; and sending the first OTA upgrade orchestration information to the intelligent device, where the first OTA upgrade orchestration information is used by the intelligent device to perform ECU flashing.

In the foregoing technical solution, the OTA server can generate, in real time based on a plurality of to-be-upgraded ECUs, information indicating a flashing sequence of a plurality of ECUs, an upgrade phase, and an intelligent device status required for an upgrade process, and send the information to the intelligent device, so that the intelligent device performs OTA upgrade. In other words, in an OTA upgrade process, information such as an ECU flashing sequence of the intelligent device or an intelligent device status required for upgrade does not need to be "hardcoded" in code of software. This helps improve flexibility of ECU flashing control in the OTA upgrade process and reduce costs of OTA upgrade control.

According to a second aspect, an OTA upgrade method is provided. The method may be performed by an OTA server, or may be performed by a chip or a circuit in an OTA server. The method may include: generating first OTA upgrade orchestration information based on M to-be-upgraded ECUs, where the first OTA upgrade orchestration information indicates at least one upgrade phase and a flashing sequence of at least one ECU in a first upgrade phase, the at least one upgrade phase includes the first upgrade phase, a total quantity of ECUs included in each of the at least one upgrade phase is M, and M is an integer greater than or equal to 1; and sending the first OTA upgrade orchestration information to an intelligent device, where the first OTA upgrade orchestration information is used by the intelligent device to perform ECU flashing.

It may be understood that, during OTA upgrade, each ECU of the intelligent device may require a different intelligent device status. For example, the intelligent device is a vehicle. An ECU that manages a power battery in the vehicle is generally flashed only when the vehicle is in a low-voltage state (that is, the vehicle is powered by a low-voltage battery), and another ECU generally needs to be flashed when the vehicle is in a high-voltage state (that is, the vehicle is powered by a power battery). Therefore, the intelligent device may preset an intelligent device status required when each ECU performs OTA upgrade. Further, after receiving the first OTA upgrade orchestration information, the intelligent device performs ECU flashing according to the flashing sequence indicated by the OTA upgrade orchestration information and the preset intelligent device status required when the ECU performs OTA upgrade.

With reference to the second aspect, in some implementations of the second aspect, the first OTA upgrade orchestration information further indicates an intelligent device status required for the first upgrade phase.

With reference to the first aspect or the second aspect, in some implementations of the first aspect or the second aspect, the method further includes: controlling, based on the first OTA upgrade orchestration information, a display apparatus to display at least one of the following: phase information of the first upgrade phase, information about the intelligent device status required for the first upgrade phase, or the flashing sequence of the at least one ECU.

The phase information of the first upgrade phase indicates a specific phase of the first upgrade phase. For example, the phase information may be information indicating which phase among installation, activation, and rollback the first upgrade phase is.

In some implementations, the flashing sequence of the at least one ECU may be represented by using a topological relationship of ECU icons, where each ECU icon represents one ECU of the intelligent device. Alternatively, the flashing sequence of the at least one ECU may be represented in another manner, for example, in a text or table form.

In the foregoing technical solution, one or more of the phase information of the first upgrade phase, the information about the intelligent device status required for the first upgrade phase, and the flashing sequence of the at least one ECU are displayed, so that a user can intuitively determine whether the OTA upgrade orchestration information is consistent with an expectation. This helps improve efficiency of OTA upgrade control.

With reference to the first aspect or the second aspect, in some implementations of the first aspect or the second aspect, generating the first OTA upgrade orchestration information based on the M to-be-upgraded electronic control units ECUs includes: generating second OTA upgrade orchestration information based on the M ECUs; and updating, according to a user instruction, any one of the following in the second OTA upgrade orchestration information to obtain the first OTA upgrade orchestration information: the flashing sequence of the at least one ECU, the information about the intelligent device status required for the first upgrade phase, or the phase information of the first upgrade phase.

In the foregoing technical solution, a method for modifying OTA upgrade orchestration information is provided for the user, so that the user can flexibly obtain upgrade phases through division for different vehicles or vehicle models and customize an intelligent device status required for an upgrade phase and a serial/parallel sequence of flashing ECUs. This helps reduce development costs of OTA upgrade control.

With reference to the first aspect or the second aspect, in some implementations of the first aspect or the second aspect, the method further includes: receiving ECU flashing information from the intelligent device, where the ECU flashing information indicates a flashing result and/or flashing progress of a first ECU, and the at least one ECU includes the first ECU; and controlling, based on the ECU flashing information, the display apparatus to display upgrade progress of the first upgrade phase, where the upgrade progress includes the flashing result and/or the flashing progress of the first ECU.

In the foregoing technical solution, in an OTA upgrade process, a flashing result and/or flashing progress of each of the at least one ECU can be displayed by the display apparatus, so that the user can intuitively determine upgrade progress and an ECU whose flashing fails. This facilitates subsequent problem handling and operation and maintenance management.

With reference to the first aspect or the second aspect, in some implementations of the first aspect or the second aspect, the first upgrade phase includes any one of the following: installation, activation, or rollback.

With reference to the first aspect or the second aspect, in some implementations of the first aspect or the second aspect, generating the first OTA upgrade orchestration information based on the M to-be-upgraded electronic control units ECUs includes: generating the first OTA upgrade orchestration information based on the M ECUs and intelligent device upgrade orchestration information, where the intelligent device upgrade orchestration information indicates an upgrade phase of each of N ECUs of the intelligent device, information about intelligent device statuses required for upgrade phases, and a flashing sequence of an ECU in each of the upgrade phases, and the N ECUs include the M ECUs.

It may be understood that N is an integer greater than or equal to M.

For example, the N ECUs may be all ECUs of the intelligent device, or the N ECUs may be some ECUs of the intelligent device. For example, the N ECUs may be ECUs that support OTA upgrade in the intelligent device. The intelligent device upgrade orchestration information may be generated according to a user instruction. For example, the intelligent device upgrade orchestration information may be generated in response to an operation performed by the user in an interface for displaying upgrade orchestration information; or the intelligent device upgrade orchestration information may be externally imported.

In the foregoing technical solution, the user may preconfigure upgrade orchestration information for all ECUs of the intelligent device. When the intelligent device actually performs OTA upgrade, OTA upgrade orchestration information may be generated for a to-be-upgraded ECU of the intelligent device based on the to-be-upgraded ECU and the preconfigured upgrade orchestration information. In addition, when some ECUs need to be flashed, the upgrade orchestration information for all ECUs of the intelligent device does not need to be sent to the vehicle. This helps reduce communication overheads.

With reference to the first aspect or the second aspect, in some implementations of the first aspect or the second aspect, the intelligent device status required for the first upgrade phase includes a power supply status and/or a KL15 status of the intelligent device.

In some implementations, for example, the intelligent device is a vehicle, and the intelligent device status required for the first upgrade phase may further include an entire vehicle status, for example, a vehicle traveling status or a vehicle availability status. The vehicle traveling status indicates whether the vehicle is allowed to travel in an upgrade process, and the vehicle availability status indicates that all functions of the vehicle are disabled or some functions of the vehicle are available in an upgrade process.

In the foregoing technical solution, the OTA upgrade orchestration information directly indicates, to the vehicle, the intelligent device status required for the first upgrade phase. This helps improve flexibility of OTA upgrade control.

According to a third aspect, an OTA upgrade method is provided. The method may be performed by an intelligent device, or may be performed by a chip or a circuit in an intelligent device. The method may include: receiving first OTA upgrade orchestration information, where the first OTA upgrade orchestration information indicates at least one upgrade phase, an intelligent device status required for a first upgrade phase of the at least one upgrade phase, and a flashing sequence of at least one ECU in the first upgrade phase; and controlling, based on the first OTA upgrade orchestration information, an intelligent device to be adjusted to the intelligent device status required for the first upgrade phase, and controlling the at least one ECU to be flashed according to the flashing sequence.

With reference to the third aspect, in some implementations of the third aspect, the method further includes: sending ECU flashing information to an OTA server, where the ECU flashing information indicates a flashing result and/or flashing progress of a first ECU, the at least one ECU includes the first ECU, the ECU flashing information is used by the OTA server to display upgrade progress of the first upgrade phase, and the upgrade progress includes the flashing result and/or the flashing progress of the first ECU.

With reference to the third aspect, in some implementations of the third aspect, the first upgrade phase includes any one of the following: installation, activation, or rollback.

With reference to the third aspect, in some implementations of the third aspect, the intelligent device status required for the first upgrade phase includes a power supply status and/or a KL15 status of the intelligent device.

According to a fourth aspect, an OTA upgrade apparatus is provided. The apparatus includes a processing unit and a transceiver unit. The processing unit is configured to generate first OTA upgrade orchestration information based on M to-be-upgraded electronic control units ECUs, where the first OTA upgrade orchestration information indicates at least one upgrade phase, an intelligent device status required for a first upgrade phase of the at least one upgrade phase, and a flashing sequence of at least one ECU in the first upgrade phase, a total quantity of ECUs included in each of the at least one upgrade phase is M, and M is an integer greater than or equal to 1. The transceiver unit is configured to send the first OTA upgrade orchestration information to an intelligent device, where the first OTA upgrade orchestration information is used by the intelligent device to perform ECU flashing.

With reference to the fourth aspect, in some implementations of the fourth aspect, the processing unit is further configured to control, based on the first OTA upgrade orchestration information, a display apparatus to display at least one of the following: phase information of the first upgrade phase, information about the intelligent device status required for the first upgrade phase, or the flashing sequence of the at least one ECU.

With reference to the fourth aspect, in some implementations of the fourth aspect, the processing unit is configured to: generate second OTA upgrade orchestration information based on the M ECUs; and update, according to a user instruction, any one of the following in the second OTA upgrade orchestration information to obtain the first OTA upgrade orchestration information: the flashing sequence of the at least one ECU, the information about the intelligent device status required for the first upgrade phase, or the phase information of the first upgrade phase.

With reference to the fourth aspect, in some implementations of the fourth aspect, the transceiver unit is further configured to receive ECU flashing information from the intelligent device, where the ECU flashing information indicates a flashing result and/or flashing progress of a first ECU, and the at least one ECU includes the first ECU. The processing unit is configured to control, based on the ECU flashing information, the display apparatus to display upgrade progress of the first upgrade phase, where the upgrade progress includes the flashing result and/or the flashing progress of the first ECU.

With reference to the fourth aspect, in some implementations of the fourth aspect, the first upgrade phase includes any one of the following: installation, activation, or rollback.

With reference to the fourth aspect, in some implementations of the fourth aspect, the processing unit is configured to generate the first OTA upgrade orchestration information based on the M ECUs and intelligent device upgrade orchestration information, where the intelligent device upgrade orchestration information indicates an upgrade phase of each of N ECUs of the intelligent device, information about intelligent device statuses required for upgrade phases, and a flashing sequence of an ECU in each of the upgrade phases, and the N ECUs include the M ECUs.

With reference to the fourth aspect, in some implementations of the fourth aspect, the intelligent device status required for the first upgrade phase includes a power supply status and/or a KL15 status of the intelligent device.

According to a fifth aspect, an OTA upgrade apparatus is provided. The apparatus includes a transceiver unit and a processing unit. The transceiver unit is configured to receive first OTA upgrade orchestration information, where the first OTA upgrade orchestration information indicates at least one upgrade phase, an intelligent device status required for a first upgrade phase of the at least one upgrade phase, and a flashing sequence of at least one ECU in the first upgrade phase. The processing unit is configured to: control, based on the first OTA upgrade orchestration information, an intelligent device to be adjusted to the intelligent device status required for the first upgrade phase, and control the at least one ECU to be flashed according to the flashing sequence.

With reference to the fifth aspect, in some implementations of the fifth aspect, the transceiver unit is further configured to send ECU flashing information to an OTA server, where the ECU flashing information indicates a flashing result and/or flashing progress of a first ECU, the at least one ECU includes the first ECU, the ECU flashing information is used by the OTA server to display upgrade progress of the first upgrade phase, and the upgrade progress includes the flashing result and/or the flashing progress of the first ECU.

With reference to the fifth aspect, in some implementations of the fifth aspect, the first upgrade phase includes any one of the following: installation, activation, or rollback.

With reference to the fifth aspect, in some implementations of the fifth aspect, the intelligent device status required for the first upgrade phase includes a power supply status and/or a KL15 status of the intelligent device.

According to a sixth aspect, an OTA upgrade apparatus is provided. The apparatus includes at least one processor, the at least one processor is coupled to at least one memory, and the at least one processor is configured to execute a computer program or instructions stored in the at least one memory, to enable the apparatus to perform the method according to any one of the possible implementations of the first aspect or the second aspect.

According to a seventh aspect, an OTA upgrade apparatus is provided. The apparatus includes at least one processor, the at least one processor is coupled to at least one memory, and the at least one processor is configured to execute a computer program or instructions stored in the at least one memory, to enable the apparatus to perform the method according to any one of the possible implementations of the third aspect.

According to an eighth aspect, an OTA server is provided. The OTA server includes the apparatus according to any one of the possible implementations of the fourth aspect or the sixth aspect.

According to a ninth aspect, an intelligent device is provided. The intelligent device includes the apparatus according to any one of the possible implementations of the fifth aspect or the seventh aspect.

With reference to the ninth aspect, in some implementations of the ninth aspect, the intelligent device is a vehicle.

According to a tenth aspect, an OTA upgrade system is provided. The system includes the apparatus according to any one of the possible implementations of the fourth aspect and the apparatus according to any one of the possible implementations of the fifth aspect; or the system includes the apparatus according to any one of the possible implementations of the sixth aspect and the apparatus according to any one of the possible implementations of the seventh aspect; or the system includes the OTA server according to any one of the possible implementations of the eighth aspect and the intelligent device according to any one of the possible implementations of the ninth aspect.

According to an eleventh aspect, a computer program product is provided. The computer program product includes computer program code. When the computer program code is run on a computer, the computer is enabled to perform the method according to any one of the possible implementations of the first aspect, the second aspect, or the fourth aspect.

It should be noted that the computer program code may be completely or partially stored in a first storage medium. The first storage medium may be packaged with a processor, or packaged separately from a processor.

According to a twelfth aspect, a computer-readable storage medium is provided. The computer-readable storage medium stores instructions. When the instructions are executed by a processor, the processor is enabled to implement the method according to any one of the possible implementations of the first aspect, the second aspect, or the fourth aspect.

According to a thirteenth aspect, a chip is provided. The chip includes a circuit, and the circuit is configured to perform the method according to any one of the possible implementations of the first aspect, the second aspect, or the fourth aspect.

For specific beneficial effects brought by the third aspect to the thirteenth aspect, refer to the descriptions of the beneficial effects in the first aspect or the second aspect. Details are not described herein again.

### BRIEF DESCRIPTION OF DRAWINGS

FIG. 1 is a block diagram of an architecture of an OTA upgrade system according to an embodiment of this application;
FIG. 2 is another block diagram of an architecture of an OTA upgrade system according to an embodiment of this application;
FIG. 3 is a schematic flowchart of an OTA upgrade method according to an embodiment of this application;
FIG. 4(a) to FIG. 4(c) are diagrams of display interfaces for information about OTA upgrade according to an embodiment of this application;
FIG. 5 is another diagram of a display interface for information about OTA upgrade according to an embodiment of this application;
FIG. 6 is a block diagram of an OTA upgrade apparatus according to an embodiment of this application; and
FIG. 7 is another block diagram of an OTA upgrade apparatus according to an embodiment of this application.

### DESCRIPTION OF EMBODIMENTS

The following describes embodiments of this application with reference to accompanying drawings in embodiments of this application.

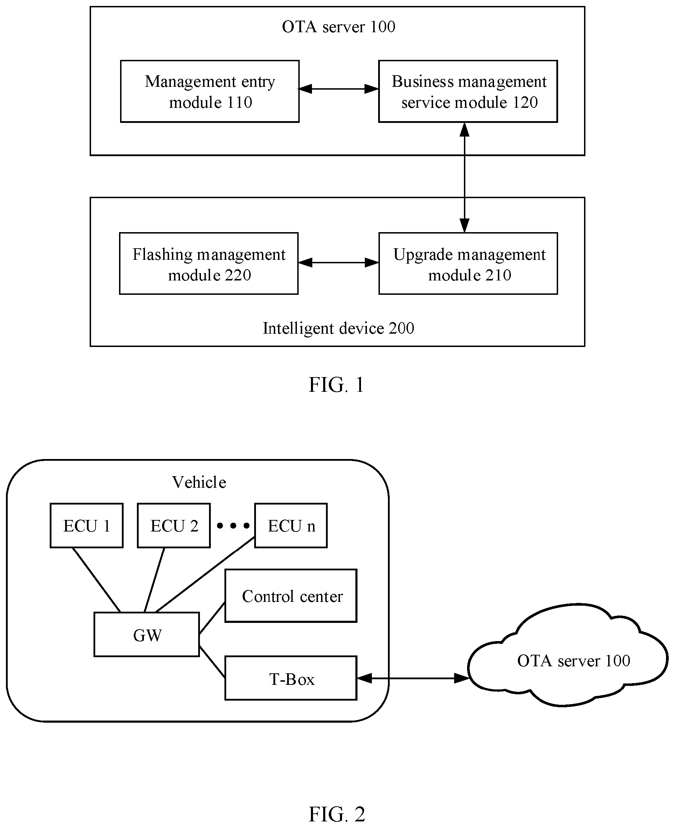

FIG. 1 is a diagram of an architecture of an OTA upgrade system according to an embodiment of this application. As shown in FIG. 1, the system includes an OTA server 100 and an intelligent device 200. The OTA server 100 includes a management entry module 110 and a business management service module 120. The intelligent device 200 includes an upgrade management module 210 and a flashing management module 220. Information about OTA upgrade, such as an OTA upgrade package and control information in an OTA upgrade process, may be transmitted between the OTA server 100 and the intelligent device 200 through the business management service module 120 and the upgrade management module 210.

More specifically, the management entry module 110 provides an interface for managing the information about OTA upgrade. For example, the management entry module 110 can determine OTA upgrade orchestration information based on information about a to-be-upgraded ECU and intelligent device upgrade orchestration information; or the management entry module 110 may generate OTA upgrade orchestration information in response to a user operation. The intelligent device upgrade orchestration information indicates OTA upgrade phases corresponding to all ECUs of a vehicle, an intelligent device status required for OTA upgrade, and an upgrade sequence of at least one ECU in each OTA upgrade phase. The OTA upgrade orchestration information includes information about an ECU flashing sequence in a current OTA upgrade process of the intelligent device and information about the intelligent device status required for OTA upgrade, or the OTA upgrade orchestration information may further include information about an OTA upgrade phase. The OTA upgrade orchestration information may be understood as control information in the OTA upgrade process.

The management entry module 110 saves the OTA upgrade orchestration information to the business management service module 120. When the intelligent device 200 needs to be upgraded, the business management service module 120 sends the OTA upgrade orchestration information to the upgrade management module 210. The upgrade management module 210 parses the OTA upgrade orchestration information, adjusts an intelligent device status based on the OTA upgrade orchestration information, and controls ECU flashing.

The flashing management module 220 is configured to: perform specific ECU flashing, and feed back ECU flashing information to the upgrade management module 210. The ECU flashing information includes an ECU flashing result and/or ECU flashing progress. The upgrade management module 210 sends the ECU flashing information to the business management service module 120, and the business management service module 120 stores the ECU flashing information. The management entry module 110 queries the business management service module 120 to obtain the ECU flashing information, and controls, based on the ECU flashing result, display of OTA upgrade progress and flashing progress or a flashing result of each ECU in the OTA upgrade process. In addition, the management entry module 110 may further control a display apparatus to display the OTA upgrade orchestration information.

The intelligent device in this application may include a road transportation tool, a water transportation tool, an air transportation tool, an industrial device, an agricultural device, an entertainment device, or the like. For example, the intelligent device may be a vehicle. The vehicle is a vehicle in a broad sense, and may be a transportation tool (for example, a commercial vehicle, a passenger vehicle, a motorcycle, a flight vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), a recreational device, a toy vehicle, or the like. A type of the vehicle is not specifically limited in embodiments of this application. For another example, the intelligent device may be an intelligent robot, a smart home device, an unmanned aerial vehicle, an airplane, a ship, or the like. The following describes technical solutions in this application by using an example in which the intelligent device is a vehicle.

For example, the intelligent device 200 is a vehicle. FIG. 2 is a diagram of an architecture of a system in a case in which an OTA upgrade solution is applied to a vehicle according to an embodiment of this application. As shown in FIG. 2, the vehicle may include at least one ECU (for example, an ECU 1 to an ECU n), an in-vehicle apparatus such as a telematics box (telematics box, T-Box) for communicating with a device outside the vehicle, a gateway (gateway, GW), and a control center. The GW is a core component in an electronic and electrical architecture of the entire vehicle. As a data exchange hub of networks of the entire vehicle, the GW may route, in different networks, data of a network such as a controller area network (controller area network, CAN) or a local interconnect network (local interconnect network, LIN). The control center implements data sending and receiving with the ECU through the gateway.

In some implementations, the upgrade management module 210 and the flashing management module 220 may be disposed in a same apparatus, for example, disposed in the gateway or the control center. The upgrade management module 210 establishes a connection to the business management service module 120 in the OTA server 100 through the T-Box. Alternatively, the upgrade management module 210 and the flashing management module 220 may be disposed in the T-Box. In some implementations, the upgrade management module 210 and the flashing management module 220 may alternatively be disposed in different apparatuses. For example, the upgrade management module 210 is disposed in the T-Box, and the flashing management module is disposed in the gateway or the control center. During specific implementation, the upgrade management module 210 may control a vehicle status through the gateway, and the flashing management module 220 controls flashing of a target ECU through the gateway.

When the electronic and electrical architecture of the vehicle is a domain-centralized architecture, the control center may be a domain controller, for example, a vehicle domain controller (vehicle domain controller, VDC), an autonomous driving domain controller (advanced driving domain controller, ADC), or a cockpit domain controller (cockpit domain controller, CDC). For another example, the control center may include any one of an in-car application-server (in-car application-server, ICAS) controller, a body domain controller (body domain controller, BDC), a special equipment system (special equipment system, SAS), a media graphics unit (media graphics unit, MGU), a body super core (body super core, BSC), or an advanced driver-assistance system super core (advanced driver-assistance system super core, ADAS super core). This is not limited in this application. The ICAS may include at least one of the following: a vehicle control server ICAS 1, an intelligent driving server ICAS 2, an intelligent cockpit server ICAS 3, or an infotainment server ICAS 4. Alternatively, the control center may include the central computing platform in the foregoing embodiment, for example, may include a vehicle central computer (Vehicle Central Computer, VCC). When the electronic and electrical architecture of the vehicle is a centralized architecture, the control center may be a central computing platform, for example, a vehicle central computer (Vehicle Central Computer, VCC).

It should be understood that the architectures shown in FIG. 1 and FIG. 2 are merely examples for description. In a specific implementation process, the system shown in FIG. 1 or FIG. 2 may include more or fewer modules or components.

The foregoing describes the architectures of the systems provided in embodiments of this application. The following describes in detail methods provided in embodiments of this application.

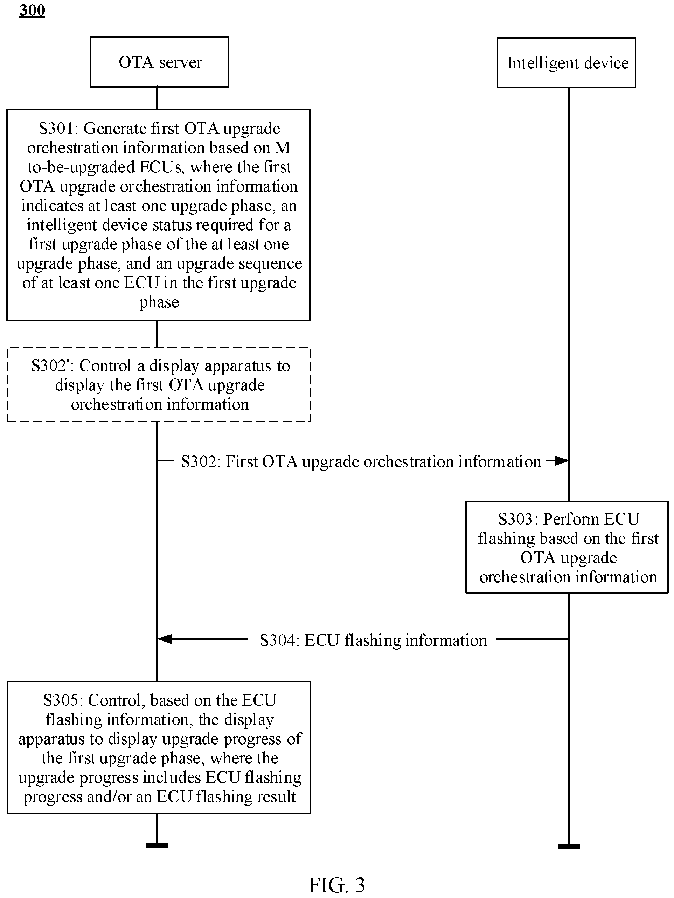

FIG. 3 is a schematic flowchart of an OTA upgrade method according to an embodiment of this application. The method 300 shown in FIG. 3 may be performed by the system shown in FIG. 1 or FIG. 2, steps performed by the OTA server may be performed by a chip or a circuit disposed in the OTA server, and steps performed by the intelligent device may be performed by a chip or a circuit disposed in the intelligent device. The method includes S301 to S305.

S301: An OTA server generates first OTA upgrade orchestration information based on M to-be-upgraded ECUs of an intelligent device, where the first OTA upgrade orchestration information indicates at least one upgrade phase, an intelligent device status required for a first upgrade phase of the at least one upgrade phase, and an upgrade sequence of at least one ECU in the first upgrade phase.

A total quantity of ECUs included in each of the at least one upgrade phase is M, and M is an integer greater than or equal to 1.

For example, before S301 is performed, the intelligent device may report information about the M to-be-upgraded ECUs to the OTA server; or the OTA server determines the M to-be-upgraded ECUs of the intelligent device in response to a user operation, where the user operation is used to select the M ECUs.

For example, the first upgrade phase may be one of an installation phase, an activation phase, or a rollback phase. The intelligent device status required for the first upgrade phase may include a power supply status required for the first upgrade phase. For example, a high-voltage state or a low-voltage state is required for the first upgrade phase. Alternatively, the intelligent device status required for the first upgrade phase may be whether KL15 power needs to be powered on. The upgrade sequence of the at least one ECU may include a sequence of serial upgrade of two or more ECUs and/or a sequence of parallel upgrade of two or more ECUs.

It should be noted that, the power supply status indicates whether the intelligent device is powered by a high-voltage battery (or an engine) or a low-voltage battery. When the intelligent device is powered by the high-voltage battery, the power supply status is the high-voltage state. When the intelligent device is powered by the low-voltage battery, the power supply status is the low-voltage state. The high-voltage battery may be a power battery, and the low-voltage battery may be a battery. The KL15 power is used to directly supply power to some ECUs in the low-voltage state. If some ECUs can be woken up only when the KL15 power is powered on, the KL15 power needs to be powered on in a flashing process of these ECUs. When some ECUs can be woken up without powering on the KL15 power, the KL15 power does not need to be powered on in a flashing process of these ECUs.

In some implementations, generating the first OTA upgrade orchestration information based on the M to-be-upgraded ECUs may include: generating second OTA upgrade orchestration information based on the M ECUs; and updating, according to a user instruction, any one of the following in the second OTA upgrade orchestration information to obtain the first OTA upgrade orchestration information: a flashing sequence of the at least one ECU, information about the intelligent device status required for the first upgrade phase, or phase information of the first upgrade phase.

In some other implementations, generating the first OTA upgrade orchestration information based on the M to-be-upgraded ECUs may further include: generating the first OTA upgrade orchestration information based on the M ECUs and intelligent device upgrade orchestration information. The intelligent device upgrade orchestration information indicates an upgrade phase of each of N ECUs of the intelligent device, information about intelligent device statuses required for upgrade phases, and a flashing sequence of an ECU in each of the upgrade phases, and the N ECUs include the M ECUs. For example, the N ECUs may be all ECUs of the intelligent device, or may be some ECUs of the intelligent device.

For example, the intelligent device upgrade orchestration information may be generated according to a user instruction, or may be externally imported into the OTA server.

In still some implementations, the first OTA upgrade orchestration information may be generated according to a user instruction.

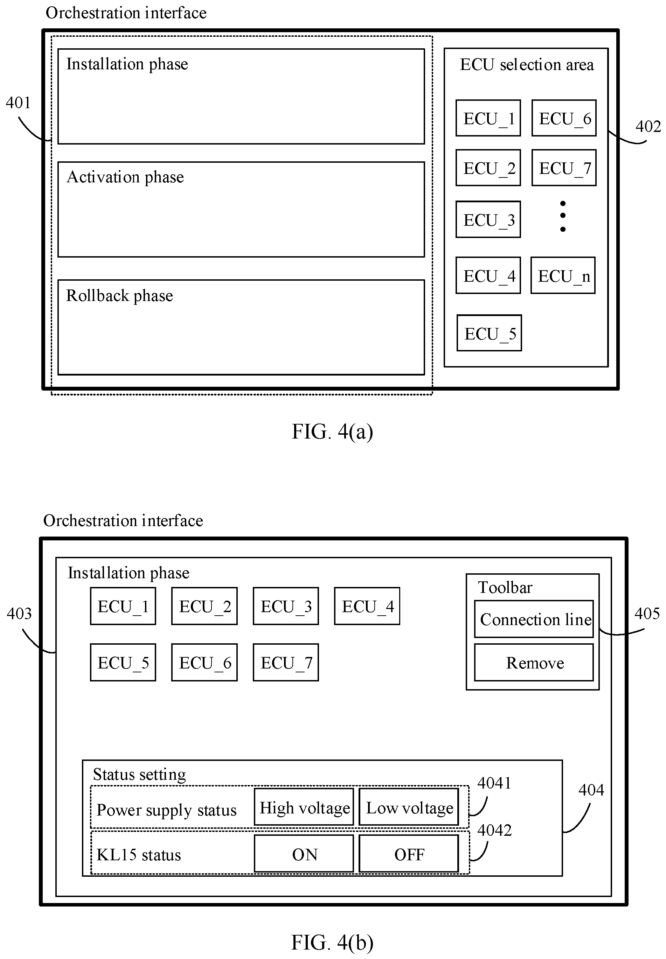

For example, generating OTA upgrade orchestration information according to a user instruction may include: S1: Determine an upgrade phase 1 according to a first instruction. S2: Determine, according to a second instruction, an intelligent device status required for the upgrade phase 1. S3: Determine at least one ECU in the upgrade phase 1 and an upgrade sequence of the at least one ECU according to a third instruction. The OTA upgrade orchestration information may include the intelligent device upgrade orchestration information, or may include the first OTA upgrade orchestration information. When the OTA upgrade orchestration information is the first OTA upgrade orchestration information, the upgrade phase 1 may be the first upgrade phase. When the OTA upgrade orchestration information is the intelligent device upgrade orchestration information, the upgrade phase 1 may be any one of the upgrade phases in the foregoing embodiments. In a specific implementation process, a sequence of performing S1 to S3 may be that S1 to S3 are performed in sequence or may be performed in any flexible combination sequence. For example, S3 is performed first, and then S1 and S2 are performed. With reference to FIG. 4(a) to FIG. 4(c), the following describes an implementation of generating the OTA upgrade orchestration information according to the user instruction.

As shown in FIG. 4(a), the OTA server controls an orchestration interface of a display apparatus to display an upgrade phase information area 401 and an ECU selection area 402. The upgrade phase information area 401 includes several phases that may be involved in OTA upgrade, and the ECU selection area 402 includes a plurality of icons, where each icon indicates one ECU. During specific implementation, an ECU that needs to be upgraded in a specific phase may be determined in response to an operation of dragging one or more icons in the ECU selection area 402 to a specific phase in the upgrade phase information area 401 by a user. For example, the user drags icons of ECU_1 to ECU_7 to an installation phase in the upgrade phase information area 401. In this case, the OTA server may determine that ECUs that need to be upgraded in the installation phase include ECU_1 to ECU_7. It may be understood that the third instruction may include an instruction generated based on an operation of dragging the icons of ECU_1 to ECU_7 to the installation phase by the user.

Further, in response to an operation of tapping a specific phase in the upgrade phase information area 401 by the user, a detailed configuration interface for the phase may be switched to. The installation phase is used as an example. As shown in FIG. 4(b), a detailed configuration interface 403 includes icons of ECU_1 to ECU_7 that need to be upgraded in the installation phase and that are determined in response to the drag action of the user, and further includes a status setting bar 404 and a toolbar 405. For example, the status setting bar 404 includes information about an intelligent device status required for upgrade, for example, information 4041 about a power supply status and information about a KL15 status. The KL15 status indicates a power-on/off state of the KL15 power. When KL15 is turned off, the KL15 power is in the power-off state, or when KL15 is turned on, the KL15 power is in the power-on state. If an operation of tapping a "High voltage" button in 4041 by the user is detected, it is determined that the power supply status needs to be a high-voltage state in the installation phase. If it is detected that the user taps an "ON" button in 4042, it is determined that the KL15 power needs to be in the power-on state in the installation phase. In addition, in response to an operation of tapping one or more icons among the icons of ECU_1 to ECU_7 by the user and an operation of tapping a "Remove" button in the toolbar 405 by the user, ECUs indicated by the one or more icons may be deleted from the installation phase. For example, in response to an operation of separately tapping the icon of ECU_4 and the icon of ECU_5 after tapping a connection line by the user, a flashing sequence relationship between ECU_4 and ECU_5 may be established; or in response to an operation of separately tapping the icon of ECU_4 and the icon of ECU_6 after tapping a connection line by the user, a flashing sequence relationship between ECU_4 and ECU_6 may be established. The OTA server may determine, according to a flashing sequence of ECU_4 and ECU_5 and a flashing sequence of ECU_4 and ECU_6, that ECU_4 and ECU_5 are in a serial flashing sequence, ECU_4 and ECU_6 are in a serial flashing sequence, and ECU_5 and ECU_6 are in a parallel flashing sequence. It may be understood that, the first instruction may include an instruction generated based on an operation of tapping the installation phase by the user, the second instruction may include an instruction generated based on an operation of tapping a specific button in the status setting bar 404 by the user, the third instruction may include an instruction generated based on an operation of separately tapping icons of two ECUs after tapping the connection line by the user, and the third instruction may further include an instruction generated based on an operation of tapping the "Remove" button after tapping an icon of a specific ECU by the user.

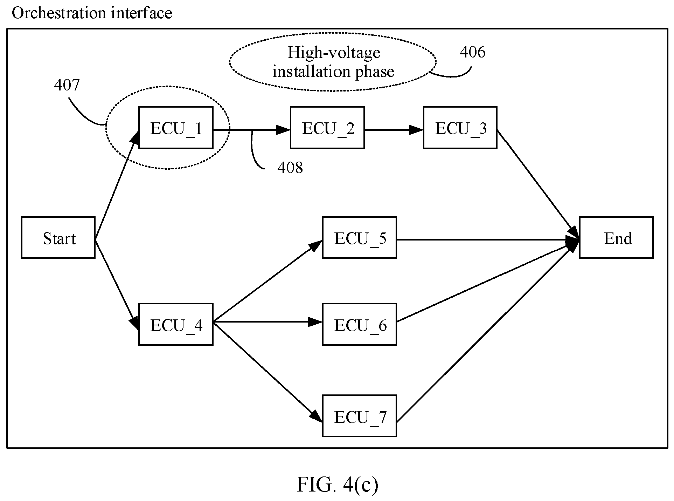

Optionally, after S301 is performed, the following may be performed: S302': The OTA server controls the display apparatus to display the OTA upgrade orchestration information. For example, after a flashing sequence of at least one ECU in the upgrade phase 1 and an intelligent device status required for the upgrade phase 1 are set, the OTA server may control the display apparatus to display an orchestration interface shown in FIG. 4(c). The orchestration interface includes an upgrade phase and information about an intelligent device status required for the upgrade phase, such as a "High-voltage installation phase" shown in a block 406, where the "installation phase" indicates a specific upgrade phase, and the "high-voltage" indicates the intelligent device status required for the upgrade phase 1. The orchestration interface may further display an icon of at least one ECU in the upgrade phase 1, for example, an icon 407 of ECU_1, and an icon indicating a flashing sequence of the at least one ECU, for example, a connection line 408, where an arrow direction is a flashing direction. To be specific, flashing of ECU_2 is performed after flashing of ECU_1 is completed. In addition, a serial/parallel flashing sequence of the at least one ECU may be intuitively displayed in FIG. 4(c). For example, ECU_1 and ECU_4 are in parallel flashing, and ECU_1 to ECU_3 are in serial flashing.

S302: The OTA server sends the first OTA upgrade orchestration information to the intelligent device.

For example, the intelligent device is a vehicle, and the OTA server may send the first OTA upgrade orchestration information to the vehicle through a T-Box of the vehicle.

S303: The intelligent device performs ECU flashing based on the first OTA upgrade orchestration information.

For example, the intelligent device adjusts the intelligent device to the corresponding intelligent device status based on the information about the intelligent device status required for the first upgrade phase, and then sequentially controls each of the at least one ECU to be flashed according to the upgrade sequence of the at least one ECU.

S304: The intelligent device sends ECU flashing information to the OTA server.

For example, the ECU flashing information may include an ECU flashing result and/or ECU flashing progress.

For example, in a flashing process of one or more ECUs, the intelligent device may send information about flashing progress of each of the one or more ECUs to the OTA server. Alternatively, after flashing results of one or more ECUs are obtained, the intelligent device may send, to the OTA server, information about the flashing result of each of the one or more ECUs, for example, a flashing success or a flashing failure.

In some implementations, the intelligent device periodically reports ECU flashing information to the OTA server. ECU flashing information reported in each period may include information about an ECU that is being flashed, and information about an ECU whose flashing is completed and that is not reported in a previous period.

S305: The OTA server controls, based on the ECU flashing information, the display apparatus to display upgrade progress of the first upgrade phase, where the upgrade progress includes the ECU flashing progress and/or the ECU flashing result.

For example, if the ECU flashing information indicates a flashing result and/or flashing progress of a first ECU, the OTA server may determine the upgrade progress of the first upgrade phase based on a location of the first ECU in the at least one ECU and the flashing result and/or the flashing progress of the first ECU. For example, the first ECU includes ECU_1 and ECU_4 in the installation phase, and the ECU flashing information indicates that flashing of ECU_1 and ECU_4 is completed and the flashing succeeds. In this case, the OTA server may determine that current upgrade progress is that the flashing of ECU_1 and ECU_4 is completed and succeeds, and control the display apparatus to show that the flashing of ECU_1 and ECU_4 succeeds and ECUs following ECU_1 and ECU_4 in an upgrade sequence have not been flashed yet. For another example, the first ECU includes ECU_2 in the installation phase, and the ECU flashing information indicates that ECU_2 is being flashed. In this case, the OTA server may determine that current upgrade progress is that ECU_2 has been flashed and an ECU following ECU_2 has not been flashed yet.

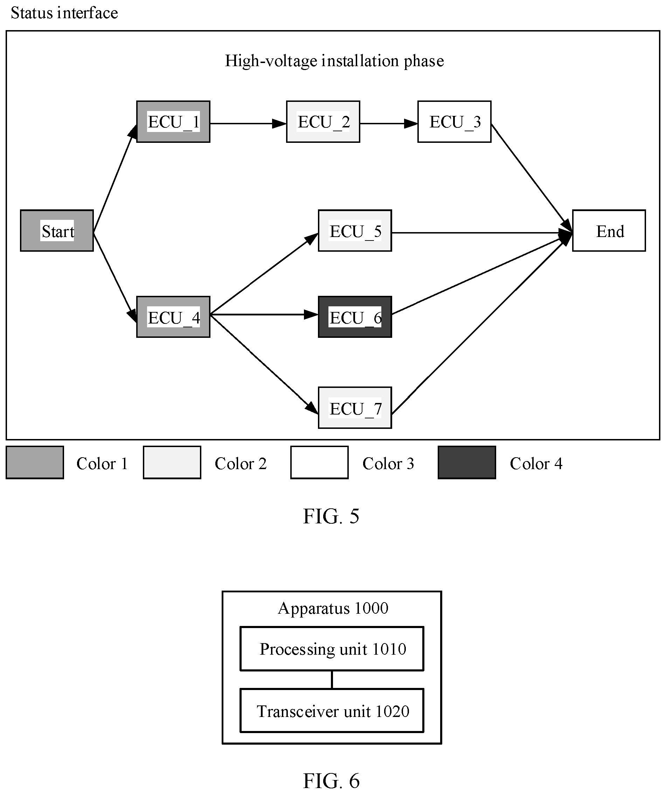

For example, when the display apparatus is controlled to display the upgrade progress, different colors may be used to represent different statuses of ECUs. For example, as shown in FIG. 5, the display apparatus displays upgrade progress of the high-voltage installation phase in a status interface. A color 1 indicates that execution (or flashing) is completed and succeeds, a color 2 indicates that flashing is being performed, a color 3 indicates that execution (or flashing) has not been performed yet, and a color 4 indicates that flashing fails.

It should be noted that the interfaces shown in FIG. 4(a) to FIG. 4(c) and FIG. 5 are merely examples for description. During actual implementation, OTA upgrade orchestration information and OTA upgrade progress information may be displayed in another form.

An embodiment of this application provides an OTA upgrade method. The method provides a way of flexibly orchestrating OTA upgrade orchestration information and displaying the OTA upgrade orchestration information. With the use of an operation interface, a user can flexibly obtain different upgrade phases through division and customize an intelligent device status required for an upgrade phase and a serial/parallel sequence of flashing ECUs. This helps reduce development costs of OTA upgrade control. In addition, in an OTA upgrade process, an operation interface can be used to display upgrade progress such as a flashing result and/or flashing progress of each ECU to operation and maintenance personnel, to facilitate operation and maintenance management.

With reference to FIG. 1 to FIG. 5, the foregoing describes in detail the OTA upgrade methods provided in embodiments of this application. In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

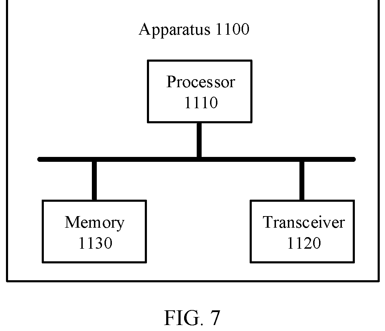

With reference to FIG. 6 and FIG. 7, the following describes in detail apparatuses provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

FIG. 6 is a block diagram of an OTA upgrade apparatus 1000 according to an embodiment of this application. The apparatus 1000 may include units configured to perform the method in FIG. 3. In addition, the units in the apparatus 1000 are for implementing corresponding procedures in the method embodiment in FIG. 3.

Specifically, the apparatus 1000 includes a processing unit 1010 and a transceiver unit 1020.

Optionally, the apparatus 1000 further includes a storage unit. The storage unit may be configured to store instructions and/or data. The processing unit 1010 may read the instructions and/or the data in the storage unit, to enable the apparatus to implement related actions performed by the terminal device in the foregoing method embodiments.

The apparatus 1000 may be configured to perform actions performed by the OTA server or the intelligent device in the foregoing method embodiments. In this case, the apparatus 1000 may be a component of the OTA server or the intelligent device. For example, the apparatus 1000 may alternatively be a chip or an integrated circuit in the OTA server or the intelligent device. The processing unit 1010 is configured to perform processing-related operations of the OTA server or the intelligent device in the foregoing method embodiments. The transceiver unit 1020 is configured to perform sending and receiving-related operations of the OTA server or the intelligent device in the foregoing method embodiments.

It should be understood that a specific process in which the units perform the foregoing corresponding steps is described in detail in the foregoing method embodiments. For brevity, details are not described herein again.

During specific implementation, actions performed by the processing unit 1010 and the transceiver unit 1020 may be implemented by one processor, or may be implemented by a plurality of processors.

In this embodiment of this application, the processor may be a central processing unit (central processing unit, CPU), a digital signal processor (digital signal processor, DSP), or the like. Alternatively, the processor may be a circuit having a signal processing capability. In an implementation, the processor may implement a specific function by using a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, a field programmable gate array (field programmable gate array, FPGA). In the reconfigurable hardware circuit, a process in which the processor loads a configuration document to implement a hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU).

FIG. 7 is another block diagram of an OTA upgrade apparatus according to an embodiment of this application. The apparatus 1100 shown in FIG. 7 may include a processor 1110, a transceiver 1120, and a memory 1130. The processor 1110, the transceiver 1120, and the memory 1130 are connected through an internal connection path. The memory 1130 is configured to store instructions. The processor 1110 is configured to execute the instructions stored in the memory 1130, to implement the methods in the foregoing embodiments. Optionally, the memory 1130 may be coupled to the processor 1110 through an interface, or may be integrated with the processor 1110.

It should be noted that the transceiver 1120 may include but is not limited to a transceiver apparatus of an input/output interface (input/output interface) type, to implement communication between the apparatus 1100 and another device or a communication network.

The memory 1130 may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, but not limitation, the RAM includes a plurality of forms, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or a transistor logic device, or a discrete hardware component, a memory (storage module) may be integrated into the processor.

It should further be noted that the memory described this specification is intended to include but is not limited to these memories and any other appropriate type of memory.

The transceiver 1120 uses, for example, but not limited to, a transceiver apparatus of a transceiver type, to implement communication between the apparatus 1100 and another device or a communication network, to receive/send data/information used to implement the methods in the foregoing embodiments.

The apparatus 1100 may be a chip or a circuit disposed in the foregoing OTA server, or the apparatus 1100 may be a chip or a circuit disposed in an intelligent device.

An embodiment of this application further provides an OTA upgrade system. The system includes the apparatus 1000 or the apparatus 1100, or the system includes the OTA server and the intelligent device in the foregoing embodiments.

An embodiment of this application further provides a computer program product. The computer program product includes computer program code. When the computer program code is run on a computer, the computer is enabled to implement the methods in the foregoing embodiments of this application.

An embodiment of this application further provides a computer-readable storage medium. The computer-readable medium stores computer instructions. When the computer instructions are run on a computer, the computer is enabled to implement the methods in the foregoing embodiments of this application.

An embodiment of this application further provides a chip, including a circuit, configured to perform the methods in the foregoing embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the descriptions of embodiments of this application, "/" means "or" unless otherwise specified. For example, A/B may indicate A or B. In this specification, "and/or" describes an association relationship between associated objects and indicates that three relationships may exist. For example, A and/or B may indicate the following three cases: Only A exists, both A and B exist, and only B exists. In this application, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

In embodiments of this application, prefix words such as "first" and "second" are merely used to distinguish between different described objects, and do not limit positions, a sequence, priorities, quantities, content, or the like of the described objects. In embodiments of this application, use of a prefix word such as an ordinal number used to distinguish between described objects does not constitute a limitation on the described objects. For descriptions of the described objects, refer to descriptions of the context in the claims or embodiments. The use of such a prefix word shall not constitute a redundant limitation.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An OTA upgrade method, comprising:
generating first OTA upgrade orchestration information based on M to-be-upgraded electronic control units ECUs of an intelligent device, wherein the first OTA upgrade orchestration information indicates at least one upgrade phase, an intelligent device status required for a first upgrade phase of the at least one upgrade phase, and a flashing sequence of at least one ECU in the first upgrade phase; and
a total quantity of ECUs comprised in each of the at least one upgrade phase is M, and M is an integer greater than or equal to 1; and
sending the first OTA upgrade orchestration information to the intelligent device, wherein the first OTA upgrade orchestration information is used by the intelligent device to perform ECU flashing.

2. The method according to claim 1, wherein the method further comprises:
controlling, based on the first OTA upgrade orchestration information, a display apparatus to display at least one of the following: phase information of the first upgrade phase, information about the intelligent device status required for the first upgrade phase, or the flashing sequence of the at least one ECU.

3. The method according to claim 1 or 2, wherein generating the first OTA upgrade orchestration information based on the M to-be-upgraded electronic control units ECUs of the intelligent device comprises:
generating second OTA upgrade orchestration information based on the M ECUs; and
updating, according to a user instruction, any one of the following in the second OTA upgrade orchestration information to obtain the first OTA upgrade orchestration information:
the flashing sequence of the at least one ECU;
the information about the intelligent device status required for the first upgrade phase; or
the phase information of the first upgrade phase.

4. The method according to any one of claims 1 to 3, wherein the method further comprises:
receiving ECU flashing information from the intelligent device, wherein the ECU flashing information indicates a flashing result and/or flashing progress of a first ECU, and the at least one ECU comprises the first ECU; and
controlling, based on the ECU flashing information, the display apparatus to display upgrade progress of the first upgrade phase, wherein the upgrade progress comprises the flashing result and/or the flashing progress of the first ECU.

5. The method according to any one of claims 1 to 4, wherein the first upgrade phase comprises any one of the following: installation, activation, or rollback.

6. The method according to any one of claims 1 to 5, wherein generating the first OTA upgrade orchestration information based on the M to-be-upgraded electronic control units ECUs of the intelligent device comprises:
generating the first OTA upgrade orchestration information based on the M ECUs and intelligent device upgrade orchestration information, wherein
the intelligent device upgrade orchestration information indicates an upgrade phase of each of N ECUs of the intelligent device, information about intelligent device statuses required for upgrade phases, and a flashing sequence of an ECU in each of the upgrade phases, and the N ECUs comprise the M ECUs.

7. The method according to any one of claims 1 to 6, wherein the intelligent device status required for the first upgrade phase comprises a power supply status and/or a KL15 status of the intelligent device.

8. An OTA upgrade method, comprising:
receiving first OTA upgrade orchestration information, wherein the first OTA upgrade orchestration information indicates at least one upgrade phase, an intelligent device status required for a first upgrade phase of the at least one upgrade phase, and a flashing sequence of at least one ECU in the first upgrade phase; and
controlling, based on the first OTA upgrade orchestration information, an intelligent device to be adjusted to the intelligent device status required for the first upgrade phase, and controlling the at least one ECU to be flashed according to the flashing sequence.

9. The method according to claim 8, wherein the method further comprises:
sending ECU flashing information to an OTA server, wherein the ECU flashing information indicates a flashing result and/or flashing progress of a first ECU, and the at least one ECU comprises the first ECU; and
the ECU flashing information is used by the OTA server to display upgrade progress of the first upgrade phase, and the upgrade progress comprises the flashing result and/or the flashing progress of the first ECU.

10. The method according to claim 8 or 9, wherein the first upgrade phase comprises any one of the following: installation, activation, or rollback.

11. The method according to any one of claims 8 to 10, wherein the intelligent device status required for the first upgrade phase comprises a power supply status and/or a KL15 status of the intelligent device.

12. An OTA upgrade apparatus, comprising:
a processing unit, configured to generate first OTA upgrade orchestration information based on M to-be-upgraded electronic control units ECUs of an intelligent device, wherein the first OTA upgrade orchestration information indicates at least one upgrade phase, an intelligent device status required for a first upgrade phase of the at least one upgrade phase, and a flashing sequence of at least one ECU in the first upgrade phase; and
a total quantity of ECUs comprised in each of the at least one upgrade phase is M, and M is an integer greater than or equal to 1; and
a transceiver unit, configured to send the first OTA upgrade orchestration information to the intelligent device, wherein the first OTA upgrade orchestration information is used by the intelligent device to perform ECU flashing.

13. The apparatus according to claim 12, wherein the processing unit is further configured to:
control, based on the first OTA upgrade orchestration information, a display apparatus to display at least one of the following: phase information of the first upgrade phase, information about the intelligent device status required for the first upgrade phase, or the flashing sequence of the at least one ECU.

14. The apparatus according to claim 12 or 13, wherein the processing unit is configured to:
generate second OTA upgrade orchestration information based on the M ECUs; and
update, according to a user instruction, any one of the following in the second OTA upgrade orchestration information to obtain the first OTA upgrade orchestration information:
the flashing sequence of the at least one ECU;
the information about the intelligent device status required for the first upgrade phase; or
the phase information of the first upgrade phase.

15. The apparatus according to any one of claims 12 to 14, wherein the transceiver unit is further configured to:
receive ECU flashing information from the intelligent device, wherein the ECU flashing information indicates a flashing result and/or flashing progress of a first ECU, and the at least one ECU comprises the first ECU; and
the processing unit is configured to control, based on the ECU flashing information, the display apparatus to display upgrade progress of the first upgrade phase, wherein the upgrade progress comprises the flashing result and/or the flashing progress of the first ECU.

16. The apparatus according to any one of claims 12 to 15, wherein the first upgrade phase comprises any one of the following: installation, activation, or rollback.

17. The apparatus according to any one of claims 12 to 16, wherein the processing unit is configured to:
generate the first OTA upgrade orchestration information based on the M ECUs and intelligent device upgrade orchestration information, wherein
the intelligent device upgrade orchestration information indicates an upgrade phase of each of N ECUs of the intelligent device, information about intelligent device statuses required for upgrade phases, and a flashing sequence of an ECU in each of the upgrade phases, and the N ECUs comprise the M ECUs.

18. The apparatus according to any one of claims 12 to 17, wherein the intelligent device status required for the first upgrade phase comprises a power supply status and/or a KL15 status of the intelligent device.

19. An OTA upgrade apparatus, comprising:
a transceiver unit, configured to receive first OTA upgrade orchestration information, wherein the first OTA upgrade orchestration information indicates at least one upgrade phase, an intelligent device status required for a first upgrade phase of the at least one upgrade phase, and a flashing sequence of at least one ECU in the first upgrade phase; and
a processing unit, configured to: control, based on the first OTA upgrade orchestration information, an intelligent device to be adjusted to the intelligent device status required for the first upgrade phase, and control the at least one ECU to be flashed according to the flashing sequence.

20. The apparatus according to claim 19, wherein the transceiver unit is further configured to:
send ECU flashing information to an OTA server, wherein the ECU flashing information indicates a flashing result and/or flashing progress of a first ECU, and the at least one ECU comprises the first ECU; and
the ECU flashing information is used by the OTA server to display upgrade progress of the first upgrade phase, and the upgrade progress comprises the flashing result and/or the flashing progress of the first ECU.

21. The apparatus according to claim 19 or 20, wherein the first upgrade phase comprises any one of the following: installation, activation, or rollback.

22. The apparatus according to any one of claims 19 to 21, wherein the intelligent device status required for the first upgrade phase comprises a power supply status and/or a KL15 status of the intelligent device.

23. An OTA upgrade apparatus, comprising at least one processor, wherein the at least one processor is coupled to at least one memory, and the at least one processor is configured to execute a computer program or instructions stored in the at least one memory, to enable the apparatus to perform the method according to any one of claims 1 to 7 or the method according to any one of claims 8 to 11.

24. An OTA upgrade system, comprising the apparatus according to any one of claims 12 to 18 and the apparatus according to any one of claims 19 to 22.

25. A computer-readable storage medium, wherein the computer-readable storage medium stores instructions, and when the instructions are executed by a processor, the processor is enabled to implement the method according to any one of claims 1 to 7 or the method according to any one of claims 8 to 11.

26. A chip, wherein the chip comprises a circuit, and the circuit is configured to perform the method according to any one of claims 1 to 7 or the method according to any one of claims 8 to 11.
